# EUROPÄISCHE PATENTSCHRIFT

(11) **EP 2 221 501 B1**
(45) Veröffentlichungstag und Bekanntmachung des Hinweises auf die Patenterteilung: **08.02.2017**
(21) Anmeldenummer: 09015664.7
(22) Anmeldetag: 18.12.2009
(51) Int. Cl.: F16F 7/14

(54) **Schockdämpfer**
Shock damper
Amortisseur de chocs

(30) Priorität: 24.02.2009 DE 102009010261
(43) Veröffentlichungstag der Anmeldung: 25.08.2010
(73) Patentinhaber: ThyssenKrupp Marine Systems GmbH, 24143 Kiel (DE)
(72) Erfinder: Schlägel, Matthias, Dr., 3037 Herrenschwanden (CH)
(74) Vertreter: ThyssenKrupp Intellectual Property GmbH

(56) Entgegenhaltungen:
- WO-A1-96/27055
- FR-A1- 2 852 371
- US-A- 5 727 391

## Beschreibung

Die Erfindung betrifft einen Schockdämpfer für die Lagerung eines Gegenstands in oder an einem Fahrzeug mit den im Oberbegriff des Anspruchs 1 angegebenen Merkmalen.

In militärisch genutzten Fahrzeugen, seien es Land-, Luft- oder Wasserfahrzeuge, ist es zweckmäßig, Geräte, Vorrichtungen und sogar ganze Abschnitte der Fahrzeugstruktur elastisch zu lagern, um sie auf diese Weise vor einer z. B. von einer Explosion verursachten Schockbelastung zu schützen. Hierzu werden bislang Schockdämpfer mit metallischen Federelementen oder mit Elastomerfederelementen verwendet. Diese Federelemente haben allerdings den Nachteil, dass sie bereits bei geringen, d. h. deutlich unterhalb des Schockfalls liegenden Belastungen nachgeben, was in der Regel aufwendige Konstruktionen mit vorgespannten Federelementen erforderlich macht, um ein Einfedern dieser Schockdämpfer bei Normalbelastungen zumindest weitgehend zu verhindern.

Des Weiteren ist es bekannt, Gegenstände zum Schutz vor einer Schockbeanspruchung auf Stauchbügeln zu lagern, was unter normalen Bedingungen eine nahezu starre Lagerung dieser Gegenstände ermöglicht. Nachteilig bei der Verwendung von Stauchbügeln ist es aber, dass sich diese im Fall einer Schockbelastung bei Überschreiten einer Grenzlast nicht elastisch, sondern plastisch also irreversibel verformen und dementsprechend nur bei einer einmaligen Schockbeanspruchung Schutz bieten und anschließend ausgetauscht werden müssen.

Weiterhin sind in der WO 96/27055 A1 Dämpfungsvorrichtungen beschrieben, deren Dämpfungselemente Formgedächtnislegierungen beinhalten.

Vor diesem Hintergrund liegt der Erfindung die Aufgabe zugrunde, einen Schockdämpfer für die Lagerung eines Gegenstandes in oder an einem Fahrzeug zu schaffen, der im Normalbetrieb des Fahrzeugs eine im Wesentlichen starre Lagerung des Gegenstands gewährleistet und bei einer Schockbeanspruchung eine ausreichende Schockdämpfung bewirkt, ohne danach seine Funktionsfähigkeit zu verlieren.

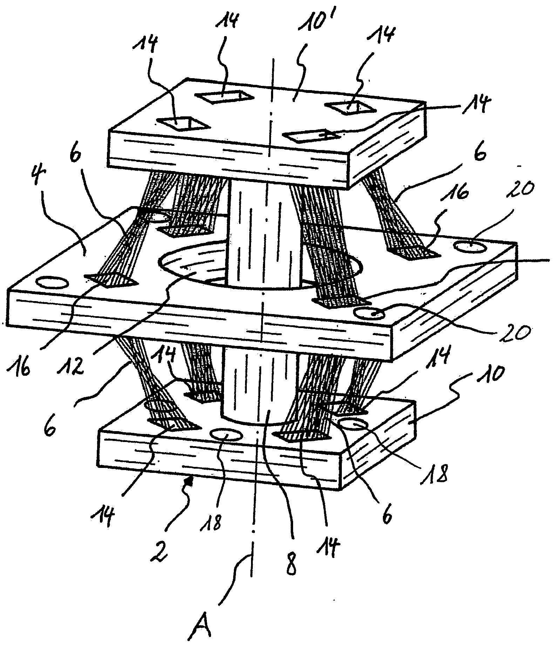

Gelöst wird diese Aufgabe durch einen Schockdämpfer mit den in Anspruch 1 angegebenen Merkmalen. Vorteilhafte Weiterbildungen dieses Schockdämpfers ergeben sich aus den Unteransprüchen, der nachfolgenden Beschreibung sowie der Zeichnung.

Der erfindungsgemäße Schockdämpfer ist neben dem Einsatz in Flugzeugen und Landfahrzeugen insbesondere zum Einsatz in Über- und Unterwasserfahrzeugen vorgesehen. Er weist mindestens ein schwingungsdämpfendes Teil auf, das zwischen einem fahrzeugseitigen Fundamentteil und einem lagerungsseitigen Teil eines schwingungsgedämpft zu lagernden Gegenstandes angeordnet ist. Bei dem Fundamentteil kann es sich um einen Teil des Fahrzeugs oder um ein Teil des Schockdämpfers handeln. Das lagerungsseitige Teil kann der zu lagernde Gegenstand selbst oder ebenfalls ein Teil des Schockdämpfers sein, das zur Aufnahme und/oder Befestigung des zu lagernden Gegenstandes vorgesehen ist. Bevorzugt sind sowohl das Fundamentteil als auch das lagerungsseitige Teil Bestandteile des Schockdämpfers.

Die Grundidee der Erfindung ist es, den schwingungsdämpfenden Teil des Schockdämpfers, d.h. den bei einer Schockbeanspruchung nachgebenden und hierdurch die Schockenergie in Bewegungsenergie umwandelnden Teil, wegen der damit verbundenen sehr guten Schockdämpfungseigenschaften zumindest teilweise aus einem Formgedächtnismaterial auszubilden.

Die in dem erfindungsgemäßen Schockdämpfer verwendeten Formgedächtnismaterialien sind auch unter der Bezeichnung "Memorymaterialien" bekannt. Ein Charakteristikum dieser Materialien ist die so genannte "Pseudoelastizität", unter der man die Eigenschaft versteht, sich einerseits bei einer äußeren Krafteinwirkung nicht linear elastisch zu verformen, andererseits aber wie Materialien, die sich linear elastisch verhalten, bei einer vollständigen Kraftentlastung wieder die Ursprungsform anzunehmen. Diese Eigenschaft macht die Formgedächtnismaterialen besonders für die Schockabsorption geeignet. Während bei den derzeit gebräuchlichen Schockdämpfern der Feder- bzw. Schockweg des Dämpfers proportional zu der auf den Dämpfer wirkenden Kraftbelastung ist, kann der erfindungsgemäße Schockdämpfer bei entsprechender Auslegung seinen Schockweg aufgrund der Verwendung von Formgedächtnismaterial bei einer konstanten Reaktionskraft freigeben. Hierdurch kann vorteilhaft eine Begrenzung der auf den zu lagernden Gegenstand wirkenden Kraft und Beschleunigung ermöglicht werden. Des Weiteren haben Formgedächtnismaterialien erheblich bessere Dämpfungseigenschaften, als die bislang in Schockdämpfern verwendeten Federmaterialien. Dies führt dazu, dass der erfindungsgemäße Schockdämpfer im Vergleich zu den bislang bekannten Schockdämpfern nach einer Schockbeanspruchung deutlich weniger nachschwingt. Ein weiterer Vorteil des erfindungsgemäß verwendeten pseudoelastischen Formgedächtnismaterials ist darin zu sehen, dass es sich zunächst bis zu einer gewissen Belastungsgrenze linear elastisch verhält und sich erst nach dem Überschreiten dieser Belastungsgrenze in der zur Schockabsorption erforderlichen Weise deformiert, ohne weitere Last aufzunehmen. Insofern kann der erfindungsgemäße Schockdämpfer bei entsprechender Auslegung unter normalen Belastungsbedingungen, d. h. bei einer unterhalb der Schockbelastung liegenden Last, die Steifigkeit eines Metalls aufweisen und so eine im Wesentlichen schwingungsfreie Lagerung eines Gegenstandes gewährleisten. Erst bei Eintreten einer Schockbeanspruchung gibt der Schockdämpfer nach, um sich unmittelbar nach der Schockeinwirkung wieder in seinen Ursprungszustand zurück zu bewegen.

Grundsätzlich können in dem erfindungsgemäßen Schockdämpfer alle pseudoelastischen Formgedächtnismaterialien eingesetzt werden, wenn sie eine ausreichende schocklastdämpfende Wirkung erzeugen. So können neben metallischen Formgedächtnislegierungen bei entsprechenden Materialeigenschaften gegebenenfalls auch Formgedächtnispolymere und Kombinationen unterschiedlicher Formgedächtnismaterialien verwendet werden. Bevorzugt ist der Schockdämpfer aber zumindest teilweise aus einer Formgedächtnislegierung und vorzugsweise aus einer Nickel-Titan-Legierung ausgebildet.

Die Bauform des bei einer Schockbeanspruchung nachgebenden Teils des Schockdämpfers kann wahlweise derart sein, dass er die Schocklast als eine auf ihn wirkende Zugkraft, Druckkraft oder in Form eines Torsions- oder Biegemoments aufnimmt. Bevorzugt ist allerdings eine Ausgestaltung bei der die Schocklast in dem nachgebenden und so die Dämpfung bewirkenden Teil des Schockdämpfers eine Zugkraft erzeugt. So bildet der zumindest teilweise aus Formgedächtnismaterial ausgebildete Teil des Schockdämpfers vorzugsweise ein Zugelement, wobei unter einem Zugelement im Sinne der Erfindung ein oder mehrere Bauteile zu verstehen sind, die sich infolge einer Schocklast bei einer im Wesentlichen konstanten Reaktionskraft in Belastungsrichtung ausdehnen und nach einer Kraftentlastung wieder ihre ursprüngliche Form annehmen.

Die konstruktive Ausgestaltung des Zugelements ist grundsätzlich beliebig. Bevorzugt ist das Zugelement allerdings aus einem oder mehreren Drähten aus Formgedächtnismaterial gebildet. Wenn mehrere Drähte das Zugelement bilden, können diese voneinander beabstandet angeordnet sein und/oder Drahtbündel bilden.

Die Verwendung von Drähten als Zugelement ist insofern vorteilhaft, als Drähte aus Formgedächtnislegierungen vom Handel als vergleichsweise preisgünstiges Halbzeug angeboten werden und für ihren Einsatz als Zugelement günstigstenfalls lediglich auf eine gewünschte Länge zugeschnitten und nicht weiterbearbeitet werden müssen. Durch geeignete Wahl des Drahtdurchmessers und/oder der Anzahl der Drähte ist das Zugelement in einfacher Weise an unterschiedliche Dämpfungsaufgaben anpassbar. Darüber hinaus haben Drähte auch den Vorteil, dass sie quer zu ihrer Längsausdehnung eine gewisse Flexibilität aufweisen und somit auch quer oder schräg zu ihrer Längsausdehnung mit einer Kraft beaufschlagt werden können, ohne dass das Zugelement hierdurch beschädigt oder zerstört wird.

Bei dem erfindungsgemäßen Schockdämpfer ist das lagerungsseitige Teil zwischen zwei daran angreifenden Zugelementen eingespannt, wobei jedes dieser Zugelemente an einem von zwei voneinander beabstandeten Fundamentteilabschnitten befestigt ist. Hierbei ist typischerweise jeweils einer dieser Fundamentteilabschnitte an einer der voneinander abgewandten Seiten des lagerungsseitigen Teils angeordnet, wobei an jeder dieser voneinander abgewandten Seiten des lagerungsseitigen Teils zumindest ein Zugelement befestigt ist, welches das lagerungsseitige Teil mit einem der Fundamentabschnitte verbindet. Derart ausgebildet kann der Schockdämpfer nicht nur in einer bestimmten Richtung wirkende Schockkräfte aufnehmen, sondern ist in der Lage, zumindest solche Schockkräfte aufzunehmen, die in zwei diametral entgegengesetzten Richtungen wirken. Darüber hinaus kann ein Schockdämpfer bei dieser Ausgestaltung insbesondere bei Einsatz von aus einem oder mehreren Drähten gebildeten Zugelementen eine Bewegung des lagerungsseitigen Teils bzw. des zu lagernden Gegenstandes quer zur Schwerkraftrichtung verhindern.

Bei der Einspannung des lagerungsseitigen Teils zwischen zwei Zugelementen ist in bevorzugter Weiterbildung vorgesehen, dass die beiden Zugelemente jeweils von vier an dem lagerungsseitigen Teil paarweise einander gegenüberliegend und gleichmäßig voneinander beabstandeten Drähten oder Gruppen von Drähten gebildet sind. Diese Drähte bzw. Gruppen von Drähten sind bevorzugt jeweils derart schräg zu einer Mittelachse des Schockdämpfers ausgerichtet, dass ihre Befestigungspunkte an dem lagerungsseitigen Teil einen größeren Abstand von der Mittelachse des Schockdämpfers aufweisen als an den Fundamentteilabschnitten. Dementsprechend spannen die Drähte bzw. bzw. Gruppen von Drähten eines Zugelements bei dieser Weiterbildung des erfindungsgemäßen Schockdämpfers zusammen mit dem lagerungsseitigen Teil und einem Fundamentteilabschnitt eine Pyramide und vorzugsweise einen Pyramidenstumpf auf. Die schräge Ausrichtung der Drähte bzw. Gruppen von Drähten befähigt den Schockdämpfer dazu, in allen drei Raumkoordinaten wirkende Schockkraftkomponenten aufnehmen zu können, so dass mit dem Schockdämpfer beliebig gerichtete Schockbelastungen aufgefangen werden können. Darüber hinaus können über die Einstellung der Winkelausrichtung der Drähte oder Gruppen von Drähten bezüglich der Mittelachse des Schockdämpfers die Einzelsteifigkeiten in Richtung der drei Raumkoordinaten an die zu erwartenden Belastungssituationen angepasst werden.

Zweckmäßigerweise sind die Zugelemente dann, wenn das lagerungsseitige Teil des Schockdämpfers zwischen zumindest zwei Zugelementen aufgehängt ist, vorgespannt. Durch diese Maßnahme wird die Federsteifigkeit des Schockdämpfers erhöht, sodass ungewollte Bewegungen des lagerungsseitigen Teils bei einem Normalbetrieb des Schockdämpfers verhindert werden und Ausgleichbewegungen dieses Teils nur bei einer Schockbeanspruchung erfolgen.

Eine besonders kompakte Bauform des Schockdämpfers kann dann erzielt werden, wenn, wie es bevorzugt vorgesehen ist, das lagerungsseitige Teil eine Durchbrechung aufweist, durch die das Fundamentteil geführt ist. Insbesondere dann, wenn der Schockdämpfer Schockbelastungen quer oder schräg zur Mittelachse des Fundamentteils aufnehmen soll, ist das Fundamentteil vorteilhaft mit freiem Abstand durch die Durchbrechung des lagerungsseitigen Teils geführt. Dementsprechend ist bei dieser Ausgestaltung der Querschnitt der an dem lagerungsseitigen Teil ausgebildeten Durchbrechung größer, als der Querschnitt des Fundamentteilabschnitts, der durch die Durchbrechung geführt ist, sodass auch schocklastbedingte Ausgleichbewegungen des lagerungsseitigen Teils in einer Ebene normal oder schräg zu der Mittelachse des Fundamentteils möglich sind.

Vorzugsweise bilden jeweils ein oder mehrere zu einer Schlaufe gewickelte Drähte die Zugelemente. Hierbei sind sowohl an dem lagerungsseitigen Teil als auch an dem Fundamentteil Befestigungsmittel für die Drähte ausgebildet, um die jeweils ein Draht oder mehrere Drähte gewickelt sind. Bevorzugt sind an dem lagerungsseitigen Teil und den zur Befestigung des lagerungsseitigen Teils vorgesehenen Fundamentteilabschnitten jeweils Bolzen vorgesehen, die typischerweise im Wesentlichen quer zu der Richtung der auf die Schlaufen wirkenden Zugkräfte ausgerichtet sind, wobei die Drähte zur Verbindung des lagerungsseitigen Teils mit dem Fundamentteil um diese Bolzen gewickelt sind.

Die Befestigung der Drähte an den Bolzen kann durch direkte Festlegung der Drahtenden an einem bzw. an zwei innerhalb einer Schlaufe angeordneten Bolzen erfolgen. Weiter vorteilhaft können auch die beiden Drahtenden zur Bildung einer geschlossenen Schlaufe miteinander verbunden werden, so dass die Drähte über die Schlaufen an den Befestigungsmitteln befestigt sind

Wie bereits angemerkt worden ist, ist der erfindungsgemäße Schockdämpfer zum Einsatz in einem Fahrzeug vorgesehen. Ein solches Fahrzeug, insbesondere Wasserfahrzeug, bildet auch Teil der Erfindung. So können beispielsweise in einem Wasserfahrzeug beliebige Gegenstände bzw. Anlagen, aber gegebenenfalls auch Teile der Schiffsstruktur, wie z. B. Decks, mittels einem oder mehreren Schockdämpfern gemäß der Erfindung gelagert und so vor Schockbeanspruchungen geschützt sein.

Nachfolgend ist die Erfindung anhand eines in der Zeichnung dargestellten Ausführungsbeispiels näher erläutert. Die Zeichnungsfigur zeigt in perspektivischer Darstellung schematisch vereinfacht einen Schockdämpfer.

Wesentliche Bestandteile des dargestellten Schockdämpfers sind ein Fundamentteil 2 und ein lagerungsseitiges Teil 4, die durch Zugelemente 6 in Form von Drähten 6 miteinander verbunden sind. Die Drähte 6 sind aus einer Ni-Ti-Legierung ausgebildet. Das Fundamentteil 2 weist einen zylindrischen Fundamentteilabschnitt 8 auf, an dessen beiden Enden jeweils ein rechteckiger plattenförmiger Fundamentteilabschnitt 10 bzw. 10' angeordnet ist, wobei sich die Fundamentteilabschnitte 10 und 10' über den Querschnitt des Fundamentteilabschnitts 8 hinaus erstrecken. Die Fundamentteilabschnitte 10 und 10' dienen zur Befestigung des lagerungsseitigen Teils 4 mittels der Drähte 6.

Das lagerungsseitige Teil 4 ist ebenfalls rechteckig plattenförmig ausgebildet und weist zentral eine normal zu den Flachseiten des Teils 4 ausgerichtete Durchbrechung 12 auf. Durch die Durchbrechung 12 ist der zylindrische Fundamentteilabschnitt 8 geführt, wobei der Innenrand der Durchbrechung 12 aufgrund eines gegenüber dem Außendurchmesser des Fundamentteilabschnitts 8 größeren Innendurchmessers der Durchbrechung 12 von dem Fundamentteilabschnitt 8 über den gesamten Umfang beabstandet ist.

An den Fundamentteilabschnitten 10 und 10' sind jeweils vier Durchbrechungen 14 und an dem Teil 4 jeweils vier Durchbrechungen 16 ausgebildet. Sowohl die Durchbrechungen 14 als auch die Durchbrechungen 16 sind an den Fundamentteilabschnitten 10 und 10' bzw. dem Teil 4 bezogen auf eine Mittelachse A des Schockdämpfers um jeweils 90° versetzt angeordnet und erstrecken sich in Richtung der Mittelachse A durch die Fundamentteilabschnitte 10, 10' bzw. durch das Teil 4. In jeder der Durchbrechungen 14 und 16 ist jeweils ein aus der Zeichnungsfigur nicht ersichtlicher Bolzen angeordnet, dessen Mittelachse sich parallel zu den Flachseiten der Platten 10, 10' bzw. des Teils 4 erstreckt.

Zur Befestigung des lagerungsseitigen Teils 4 an dem Fundamentteil 2 ist jeweils ein Draht 6 mehrmals in Form sich kreuzender Schlaufen um einen Bolzen des Fundamentteilabschnitts 10' und einen korrespondierend angeordneten Bolzen des Teils 4 gewickelt und in ähnlicher Weise jeweils ein weiterer Draht 6 ebenfalls in mehreren sich kreuzenden Schlaufen um einen Bolzen des Fundamentteilabschnitts 10 und einen Bolzen des Teils 4 gewickelt. Auf diese Weise ist das lagerungsseitige Teil 4 bezogen auf die Mittelachse A des Schockdämpfer im Wesentlichen mittig zwischen den Fundamentteilabschnitten 10 und 10' des Fundamentteils 2 verspannt aufgehängt. Dabei sind die Drähte 6 vorgespannt. Hierbei sind die zu Schlaufen gewickelten Drähte 6 schräg zu der Mittelachse A des Schockdämpfers ausgerichtet, da die in den Durchbrechungen 16 des lagerungsseitigen Teils 4 angeordneten Bolzen von der Mittelachse A weiter beabstandet sind als die in den Durchbrechungen 14 der Fundamentteilabschnitte 10 und 10' angeordneten Bolzen.

Der Fundamentteilabschnitt 10 dient zur Befestigung des Schockdämpfers in einem Fahrzeug. Hierzu weist der Fundamentteilabschnitt 10 vier sich parallel zur Mittelachse A des Schockdämpfers erstreckende Bohrungen 18 auf, die jeweils zur Aufnahme einer Befestigungsschraube vorgesehen sind. Auf dem Teil 4 wird ein Gegenstand in einem Fahrzeug schwingungsgedämpft gelagert, wobei er an dem Teil 4 mittel-oder unmittelbar verschraubt werden kann. Hierzu sind an dem Teil 4 vier Bohrungen 20 ausgebildet, durch die Befestigungsschrauben geführt werden können.

Die Funktionsweise des erfindungsgemäßen Schockdämpfers ist wie folgt:
Wirkt eine Schocklast z.B. senkrecht auf die dem Fundamentteilabschnitt 10' zugewandte Flachseite des Teils 4 werden die das Teil 4 mit dem Fundamentteilabschnitt 10' verbindenden Drähte 6 einer Zugbelastung unterworfen und gedehnt. Diese Dehnung erfolgt aufgrund der pseudoelastischen Eigenschaften des verwendeten Formgedächtnismaterials der Drähte 6 bei einer konstanten auf die Drähte 6 wirkenden Kraft, wodurch die auf das lagerungsseitige Teil 4 und damit die auf den dort gelagerten Gegenstand wirkende Kraft und Beschleunigung bei hoher innerer Dämpfung begrenzt werden. Nach der Schockbelastung nehmen die Drähte 6 wieder ihre ursprüngliche Form an, so dass das lagerungsseitige Teil 4 und der dort gelagerte Gegenstand wieder die Position einnehmen, die sie vor der Schockbelastung innehatten. Aufgrund der bezogen auf die Mittelachse A des Schockdämpfers schrägen Ausrichtung aller von den Drähten 6 gebildeten Zugelemente 6 besitzt der erfindungsgemäße Schockdämpfer die Fähigkeit, aus beliebiger Richtung wirkende Schockbelastungen aufzunehmen und zu dämpfen, wobei der gegenüber dem Außendurchmesser des Fundamentteilabschnitts 8 deutlich größere Innendurchmesser der Durchbrechung 12 auch Ausgleichbewegung des lagerungsseitlichen Teils 4 ermöglicht, die in einer Ebene normal zur Mittelachse A des Schockdämpfers erfolgen. Darüber hinaus ermöglicht die konstruktive Gestaltung des Schockdämpfers im Normalbetrieb, d.h., ohne dass der Schockdämpfer einer Schockbeanspruchung unterworfen ist, eine nahezu schwingungsfreie Lagerung von Gegenständen.

### Bezugszeichenliste

- 2: - Fundamentteil
- 4: - Lagerungsseitiges Teil
- 6: - Zugelement, Draht
- 8: - Fundamentteilabschnitt
- 10, 10': - Fundamentteilabschnitt
- 12: - Durchbrechung
- 14: - Durchbrechung
- 16: - Durchbrechung
- 18: - Bohrung
- 20: - Bohrung

- A: - Mittelachse

## Patentansprüche

1. Schockdämpfer für die Lagerung eines Gegenstandes in oder an einem Fahrzeug, insbesondere Über- oder Unterwasserfahrzeug, mit mindestens einem, schwingungsdämpfenden Teil zwischen einem fahrzeugseitigen Fundamentteil (2) und einem lagerungsseitigen Teil (4) des schwingungsgedämpft zu lagernden Gegenstandes, wobei das schwingungsdämpfende Teil zumindest teilweise aus Formgedächtnismaterial ausgebildet ist, wobei der zumindest teilweise aus Formgedächtnismaterial ausgebildete Teil des Schockdämpfers ein Zugelement (6) bildet, **dadurch gekennzeichnet, dass** das lagerungsseitige Teil (4) zwischen zwei daran angreifenden Zugelementen (6) eingespannt ist, welche an zwei voneinander beabstandeten Fundamentteilabschnitten (10, 10')derart befestigt sind, dass in zwei diametral entgegengesetzte Richtungen wirkende Schockkräfte aufgenommen werden können.

2. Schockdämpfer nach Anspruch 1, **dadurch gekennzeichnet, dass** das schwingungsdämpfende Teil zumindest teilweise aus einer Formgedächtnislegierung, vorzugsweise einer Nickel-Titan-Legierung ausgebildet ist.

3. Schockdämpfer nach Anspruch 1 oder 2, **dadurch gekennzeichnet, dass** das Zugelement (6) aus einem oder mehreren Drähten (6) aus Formgedächtnismaterial gebildet ist.

4. Schockdämpfer nach einem der vorangehenden Ansprüche, **dadurch gekennzeichnet, dass** die Zugelemente (6) jeweils von vier an dem lagerungsseitigen Teil (4) paarweise einander gegenüberliegend und gleichmäßig von einander beabstandeten Drähten (6) oder Gruppen von Drähten (6) gebildet sind, wobei die Drähte (6) oder Gruppen von Drähten (6) jeweils derart schräg zu einer Mittelachse (A) des Schockdämpfers ausgerichtet sind, dass ihre Befestigungspunkte an dem lagerungsseitigen Teil (4) einen größeren Abstand von der Mittelachse (A) des Schockdämpfers als an den Fundamentteilabschnitten (10, 10') aufweisen.

5. Schockdämpfer nach einem der vorangehenden Ansprüche, **dadurch gekennzeichnet, dass** die Zugelemente (6) vorgespannt sind.

6. Schockdämpfer nach einem der vorangehenden Ansprüche, **dadurch gekennzeichnet, dass** das lagerungsseitige Teil (4) eine Durchbrechung (12) aufweist, durch die das Fundamentteil (2) vorzugsweise mit freiem Spiel geführt ist.

7. Schockdämpfer nach einem der Ansprüche 3 bis 6, **dadurch gekennzeichnet, dass** sowohl an dem lagerungsseitigen Teil (4) als auch an dem Fundamentteil (2) Befestigungsmittel für Drähte (6) ausgebildet sind, um die zumindest ein Draht (6) unter Bildung einer geschlossenen Schlaufe gewickelt ist.

8. Schockdämpfer nach Anspruch 7, **dadurch gekennzeichnet, dass** die Drähte (6) über die Schlaufen an den Befestigungsmitteln befestigt sind.

9. Fahrzeug, insbesondere Wasserfahrzeug, **dadurch gekennzeichnet, dass** es einen Schockdämpfer nach einem der vorangehenden Ansprüche aufweist.

## Claims

1. Shock damper for mounting an object in or on a vehicle, in particular a surface vessel or submarine vessel, comprising at least one vibration-damping part between a vehicle-side foundation part (2) and a mounting-side part (4) of the object to be mounted in a vibration-damped manner, wherein the vibration-damping part is formed at least partially from shape memory material, wherein the part of the shock damper that is formed at least partially from shape memory material forms a tension element (6), **characterized in that** the mounting-side part (4) is clamped between two tension elements (6) which act thereon and which are fastened to two spaced-apart foundation part portions (10, 10') in such a way that shock forces acting in two diametrically opposite directions can be absorbed.

2. Shock damper according to Claim 1, **characterized in that** the vibration-damping part is formed at least partially from a shape memory alloy, preferably a nickel-titanium alloy.

3. Shock damper according to Claim 1 or 2, **characterized in that** the tension element (6) is formed from one or more wires (6) of shape memory material.

4. Shock damper according to one of the preceding claims, **characterized in that** the tension elements (6) are each formed by four wires (6) spaced opposite one another in pairs and uniformly from one another on the mounting-side part (4) or groups of wires (6), wherein the wires (6) or groups of wires (6) are each oriented obliquely with respect to a centre axis (A) of the shock damper in such a way that their fastening points on the mounting-side part (4) are at a greater spacing from the centre axis (A) of the shock damper than at the foundation part portions (10, 10').

5. Shock damper according to one of the preceding claims, **characterized in that** the tension elements (6) are prestressed.

6. Shock damper according to one of the preceding claims, **characterized in that** the mounting-side part (4) has an opening (12) through which the foundation part (2) is preferably guided with free play.

7. Shock damper according to one of Claims 3 to 6, **characterized in that** fastening means for wires (6) around which at least one wire (6) is wound to form a closed loop are formed both on the mounting-side part (4) and on the foundation part (2).

8. Shock damper according to Claim 7, **characterized in that** the wires (6) are fastened to the fastening means via the loops.

9. Vehicle, in particular a water vessel, **characterized in that** it comprises a shock damper according to one of the preceding claims.

## Revendications

1. Amortisseur de choc pour le support d'un objet dans ou sur un véhicule, en particulier un véhicule se déplaçant sur ou sous l'eau, comprenant au moins une partie amortissant les vibrations entre une partie de base (2) du côté du véhicule et une partie du côté du support (4) de l'objet à supporter avec amortissement des vibrations, la partie amortissant les vibrations étant réalisée au moins en partie à partir d'un matériau à mémoire de forme, la partie de l'amortisseur de choc réalisée au moins en partie à partir d'un matériau à mémoire de forme formant un élément de traction (6), **caractérisé en ce que** la partie du côté du support (4) est serrée entre deux éléments de traction (6) s'engageant sur celle-ci, lesquels sont fixés à deux portions de partie de base espacées l'une de l'autre (10, 10') de telle sorte que des forces de choc agissant dans deux directions diamétralement opposées puissent être reçues.

2. Amortisseur de choc selon la revendication 1, **caractérisé en ce que** la partie amortissant les vibrations est réalisée au moins en partie à partir d'un alliage à mémoire de forme, de préférence un alliage de nickel-titane.

3. Amortisseur de choc selon la revendication 1 ou 2, **caractérisé en ce que** l'élément de traction (6) est formé d'un ou plusieurs fils métalliques (6) en matériau à mémoire de forme.

4. Amortisseur de choc selon l'une quelconque des revendications précédentes, **caractérisé en ce que** les éléments de traction (6) sont formés à chaque fois par quatre fils métalliques (6) ou groupes de fils métalliques (6) espacés uniformément les uns des autres et opposés par paires les uns aux autres sur la partie du côté du support (4), les fils métalliques (6) ou les groupes de fils métalliques (6) étant chaque fois orientés obliquement par rapport à un axe médian (A) de l'amortisseur de choc de telle sorte que leurs points de fixation à la partie du côté du support (4) soient plus éloignés de l'axe médian (A) de l'amortisseur de choc que des portions de la partie de base (10, 10').

5. Amortisseur de choc selon l'une quelconque des revendications précédentes, **caractérisé en ce que** les éléments de traction (6) sont précontraints.

6. Amortisseur de choc selon l'une quelconque des revendications précédentes, **caractérisé en ce que** la partie du côté du support (4) présente un orifice (12) à travers lequel la partie de base (2) est guidée, de préférence avec un jeu libre.

7. Amortisseur de choc selon l'une quelconque des revendications 3 à 6, **caractérisé en ce qu'**au niveau de la partie du côté du support (4) ainsi qu'au niveau de la partie de base (2) sont réalisés des moyens de fixation pour des fils métalliques (6) autour desquels au moins un fil métallique (6) est enroulé en formant une boucle fermée.

8. Amortisseur de choc selon la revendication 7, **caractérisé en ce que** les fils métalliques (6) sont fixés par le biais des boucles aux moyens de fixation.

9. Véhicule, en particulier véhicule se déplaçant sur l'eau, **caractérisé en ce qu'**il présente un amortisseur de choc selon l'une quelconque des revendications précédentes.
